# EUROPEAN PATENT APPLICATION

(11) **EP 4 582 340 A1**
(43) Date of publication of application: **09.07.2025**
(21) Application number: 24150423.2
(22) Date of filing: 04.01.2024
(51) Int. Cl.: B64D 11/00, F16B 5/00, B64C 1/06

(54) **FASTENING DEVICE AND RAIL DEVICE FOR COMPENSATING TOLERANCES WHEN FASTENING A COMPONENT TO A SUPPORT STRUCTURE OF A MEANS OF TRANSPORT AS WELL AS FASTENING SYSTEM, AIRCRAFT, ASSEMBLY METHOD FOR COMPENSATING TOLERANCES WHEN FASTENING A COMPONENT TO A SUPPORT STRUCTURE OF A MEANS OF TRANSPORT AND MANUFACTURING METHOD FOR MANUFACTURING A FASTENING DEVICE FOR COMPENSATING TOLERANCES**

(71) Applicant: Airbus Operations GmbH, 21129 Hamburg (DE)
(72) Inventor: Petersen, Lauritz, 21129 Hamburg (DE); Benthien, Hermann, 21129 Hamburg (DE)

(57) **Abstract**

The present invention provides a fastening device (10) for compensating tolerances when fastening a component (101) to a support structure (2) of a means of transport, in particular when fastening a cabin fitting element to a frame of an aircraft (100). Further, the present invention provides a rail device for compensating tolerances when fastening a component (101) to a support structure (2) of a means of transport, in particular when fastening a cabin fitting element to a frame of an aircraft (100). The present invention further provides a fastening system (1) and an aircraft (100) comprising such a fastening device (10) and such a rail device (20). Further, the present invention provides an assembly method for compensating tolerances when fastening a component to a support structure of a means of transport as well as a manufacturing method for manufacturing a fastening device for compensating tolerances.

## Description

The invention relates to a fastening device for compensating tolerances when fastening a component to a support structure of a means of transport, in particular when fastening a cabin fitting element to a frame of an aircraft. The invention further relates to a rail device for compensating tolerances when fastening a component to a support structure of a means of transport, in particular when fastening a cabin fitting element to a frame of an aircraft. The invention is furthermore concerned with a fastening system containing such a fastening device and such a rail device. Further, the invention relates to an aircraft and an assembly method for compensating tolerances when fastening a component to a support structure of a means of transport, in particular when fastening a cabin fitting element to a frame of an aircraft. The invention is furthermore concerned with a manufacturing method for manufacturing a fastening device for compensating tolerances.

Modern vehicles such as aircraft and spacecraft are manufactured in sections, that are pre-assembled. For attaching further components to those sections attachment systems are needed. Especially in the field of aircraft and spacecraft a high precision in manufacturing is important.

Further, the interior lining of aircraft is generally composed of individual elements, in which substantially plates or panels are placed adjacent to each other in a given framework or support structure. These plates or panels serve for example as cabin fitting elements.

Nevertheless, each section and component or plate/panel of the aircraft has different manufacturing tolerances, which are to match during assembly processes.

Due to tolerances in the aircraft primary structure it is in serial production difficult to align such individual interior components properly to be visually appealing. This is a requirement for the handover of the aircraft to the customer.

Aspects of the invention may provide solutions for an adjustable and universal fastening device, rail device and fastening system for assembling a customized interior component to the primary structure.

According to the invention, this problem is solved in each case by the subject matters of the independent claims.

According to a first aspect of the invention, a fastening device for compensating tolerances when fastening a component to a support structure of a means of transport is provided. In particular, a fastening device for compensating tolerances when fastening a cabin fitting element to a frame of an aircraft is provided. The fastening device comprises a base structure having at least three elongated profile edges or sides, respectively. Furthermore, the fastening device comprises two profile legs for positively locking or form fitting, respectively a first elongated profile edge of the at least three elongated profile edges to a rail device. The two profile legs at least partly extend along the first elongated profile edge, such that the first elongated profile edge comprises a substantially three-legged cross sectional shape. The two profile legs are engageable with a longitudinal recess of the rail device and comprise a curvature in a cross sectional view. Further, the fastening device comprises a fastening interface for connecting the fastening device to a support structure. The fastening interface is arranged at an area of an intersection of a second elongated profile edge and a third elongated profile edge.

According to a second aspect of the invention, a rail device for compensating tolerances when fastening a component to a support structure of a means of transport is provided. In particular, a rail device for compensating tolerances when fastening a cabin fitting element to a frame of an aircraft is provided. The rail device comprises a longitudinal recess for guiding a first elongated profile edge of a fastening device. Further, the rail device comprises cutouts for positively locking or form fitting, respectively, the rail device to the fastening device by a locking unit.

According to a third aspect of the invention, a fastening system for compensating tolerances when fastening a component to a support structure of a means of transport is provided. In particular, a fastening system for compensating tolerances when fastening a cabin fitting element to a frame of an aircraft is provided. The fastening system comprises a support structure having a fastening interface. Furthermore, the fastening system comprises a fastening device according to the first aspect of the invention. The fastening device is mountable to the support structure via the corresponding fastening interfaces. Moreover, the fastening system comprises a rail device according to the second aspect of the invention. The two profile legs are guided in the longitudinal recess. The fastening system further comprises a locking unit, which is arranged at least sectionwise in the longitudinal recess at an end region of the fastening device. The locking unit positively locks the fastening device to the rail device in relation to a longitudinal axis such that tolerances are compensable along the longitudinal axis.

According to a fourth aspect of the invention, an aircraft is provided. The aircraft comprises a cabin fitting element, in particular an overhead compartment, which is fixed to a frame of the aircraft by means of a fastening system according to the third aspect of the invention.

According to a fifth aspect of the invention, an assembly method for compensating tolerances when fastening a component to a support structure of a means of transport is provided. In particular, an assembly method for compensating tolerances when fastening a cabin fitting element to a frame of an aircraft is provided. The assembly method comprises the step of providing a rail device according to the second aspect of the invention and the step of inserting a first elongated profile edge of a fastening device according to the first aspect of the invention into the longitudinal recess of the rail device. The two profile legs are guided in the longitudinal recess. The assembly method further comprises the step of inserting a locking unit into the longitudinal recess of the rail device such that the locking unit is arranged at an end region of the fastening device. The assembly method further comprises the step of positively locking the fastening device to the rail device by the locking unit in relation to a longitudinal axis such that tolerances are compensable along the longitudinal axis.

According to a sixth aspect of the invention, a manufacturing method for manufacturing a fastening device for compensating tolerances is provided. In particular, a manufacturing method for manufacturing a fastening device according to the first aspect of the invention is provided. The manufacturing method comprises the step of extruding an endless structural profile with a base structure and two profile legs arranged at a first elongated profile edge of the base structure. The two profile legs comprise a curvature in a cross sectional view. The manufacturing method further comprises the step of cutting the endless structural profile such that a fastening device is provided. The fastening device comprises the base structure having at least three elongated profile edges, wherein the at least three elongated profile edges include the first elongated profile edge.

A fundamental concept of the invention is to provide a continuous secondary structure interface or fastening system, respectively, with a nearby stepless tolerance compensation combined with structural load carrying elements with a floating capability in one direction, in particular in X-direction. Optical measurement and adjustment can be combined with the present invention for tolerance compensation. The curvature of the two profile legs can be configured to be used as a rotary connection to a rail device. The three elongated profile edges may form a triangle, in particular a right-angled tringle.

A fastening element for connecting the fastening device to a support structure or a connector system, respectively, can be attached independently from the present invention. A short and direct load path can be provided. Furthermore, the fastening interface can be used to consider primary insulation and/or electrical grounding. For example, the fastening interface can be used with a fastening element like a funnel element having a funnel-like basic shape with a funnel opening. The fastening element can be configured as a locking pin, a bolt, a screw or a similar connector, for example.

The cutouts can be configured for engaging with a locking unit, which are arranged stepwise along the longitudinal recess. The rail device can be manufactured by an extrusion process. Tolerance compensation can be provided inside the rail device. Furthermore, a visual indication of the locking can be provided by the present invention. Advantageously, the present invention provides a toolless locking. A so called knee joint or rotary joint design improves transferring of loads via a large surface. The rail device can be configured as an extruded profile.

The fastening interface can be configured to be used by a pin connector or similar releasable fastening elements. The corresponding fastening interfaces have a mutually adapted shape. For example, tolerances of the frames of an aircraft can be compensated along the longitudinal axis X. Thereby, the locking unit is configured to withstand predetermined loads, in particular crash loads, that can be transferred in X-direction, so along the longitudinal axis. The fastening system provides a secondary structure brick which can be sticked together in a traveling direction of the means of transport. Further, the fastening system can provide a continuous load introduction and/or distribution inside a fuselage of the means of transport like an aircraft. Multiple load path design.

By extruding the endless structural profile dimensions of the two profile legs can be reduced. Furthermore, the two profile legs can be integrally manufactured at the base structure. Hence, an number of parts, a weight and/or a manufacturing time can be reduced.

Thereby, compensating tolerances can be performed to an extent of the cutouts in the rail device and/or of the at least one groove, for example. Each cutout and/or groove can be formed and dimensioned such that a predetermined tolerance distance in a specific direction is provided. The fastening system can also be described as a frame independent rotary interface which creates a nearby stepless tolerance compensation on a short distance.

A particular advantage in the solution according to an aspect of the invention is that manufacturing efforts for assembling components, in particular cabin fitting elements, with the support structure is reduced. Hence, the present invention combines an inplane tolerance compensation of the manufacturing tolerances of the support structure, the fastening device and the component. Furthermore, the fastening system with the fastening device provides a smoother load introduction in weak and light components such as the hatrack structure of an aircraft.

Another advantage is that a smooth and continuous load introduction in the support structure or primary structure and/or a master - slave principle for the cabin adjustment can be provided. Further, a light and cheap tolerance compensation, in particular with a nearby stepless tolerance compensation on a short distance, can advantageously be provided by this invention. One further advantage can be reducing the weight of the fastening system compared to known solutions for compensating tolerances. Furthermore, a load transfer without parasitic moments can be provided. The fastening system can be applied without compromising on a crash load path of the support structure.

In the meaning of the present invention the process step of extruding includes every pressure forming manufacturing process.

Advantageous embodiments and further developments emerge from the description with reference to the figures.

According to an embodiment of the present invention, the two profile legs comprise at least one groove for positively locking or form fitting, respectively, the fastening device to the rail device in direction of the first elongated profile edge, wherein the at least one groove extends from one profile leg to the other profile leg. In other words, the two profile legs have partially steps for form fitting in one direction.

According to another embodiment of the present invention, the at least one groove is arranged at an end region of the first elongated profile edge. The at least one groove can be arranged at one end region of the first elongated profile edge or at both end regions.

According to another embodiment of the present invention, the at least one groove extends between each front end of the two profile legs and faces away from the base structure.

According to another embodiment of the present invention, the base structure comprises a cutout, in particular a triangular cutout. Hence, a weight of the fastening device can be reduced. For example, the cutout can be shaped as a triangle, rectangle, circle or similar. Furthermore, a corner of the triangle or the rectangle can be shaped angular, rounded or combinations thereof.

For example, the fastening interface can be configured as a bolt end to receive a pin or alternative fastening elements.

Optionally, the fastening device can be made of a metal, a plastic or a compound of those. The metal includes aluminum, titanium, metal alloys or other light weight metals, for example. The plastic exemplarily includes fiber reinforced plastics. For example, the base structure has a continuous thickness. The two profile legs can have the same thickness as the base structure.

According to another embodiment of the present invention, the rail device further comprises a hole for receiving an anti-twist protection member, wherein the hole is arranged at the cutouts and extends substantially parallel to the longitudinal recess. That means the hole is configured as a counterpart for the anti-twist protection member. The anti-twist protection member can be configured as a spring loaded ball, for example.

According to another embodiment of the present invention, the rail device further comprises an end stop for stopping a rotation of the locking unit when getting into engagement with one of the cutouts, wherein the end stop extends along the longitudinal recess.

According to another embodiment of the present invention, the curvature of the two profile legs has a radius that is corresponding to a distance between the two profile legs and a mass center of an attached component. Thus, loads transmitted by the fastening system can act through the mass center independently of the swivel movement for tolerance compensation.

According to another embodiment of the present invention, the locking unit comprises at least one groove, which is corresponding to at least one groove of the two profile legs of the fastening device. That means, the locking unit has at least one groove or steps as a locking counterpart to engage with the at least one groove or steps of the two profile legs.

Alternatively or additionally, the locking unit can engage with the rail device by a teeth connection. In other words, a rotary teeth connection can be provided between the fastening device or bracket, respectively, and the rail device or secondary structure rail, respectively. In case the fastening system comprises the at least one groove as well as the teeth connection a stepwise locking by the locking unit with stepless adjustment by the teeth connection. Hence, the fastening system is fine adjustable in the longitudinal axis with form fit.

According to another embodiment of the present invention, the longitudinal recess forms a circular segment in a cross sectional view, wherein the circular segment is larger than the two curved profile legs of the first elongated profile edge. That means the longitudinal recess is dimensioned such that the elongated first edge and the two profile legs have a clearance in the longitudinal recess. Hence, the fastening device can be swiveled relative to the rail device up to 10° when mounted in the rail device.

The longitudinal recess can extend along a longitudinal axis.

According to another embodiment of the present invention, the locking unit comprises a lever for locking the locking unit in the direction of the longitudinal axis by pivoting the locking unit such that the lever engages with one of the cutouts of the rail device. For example, the locking unit can be configured as a locking wedge for tolerance compensation.

The locking unit can comprise an anti-twist protection member for preventing unintentional unlocking. Such an unintentional unlocking may occur due to vibrations or similar circumstances. The anti-twist protection member can be configured as an automatic anti-twist protection. For automatic use the anti-twist protection member can comprise a spring loaded ball. Furthermore, the anti-twist protection member can be released, in particular for de-installation.

Additionally, the locking unit can be configured to positively lock the fastening device to the rail device such that tolerances are compensable by a swivel movement of the fastening device relative to the rail device about the longitudinal axis. The fastening system can provide a swinging or rotation, respectively, of the fastening device relative to the rail device around the longitudinal axis, for example in a Y-direction.

For example, the support structure is configured as a frame of an aircraft. For example, the cabin fitting element comprises the rail device or the rail device is integrated in the cabin fitting element. Thus, aircraft components are well-tested and mostly standardized.

According to another embodiment of the present invention, the locking unit is inserted into the longitudinal recess such that an at least one groove of the locking unit overlaps an at least one corresponding groove of the fastening device without being in engagement.

According to another embodiment of the present invention, the step of positively locking includes a pivoting of the locking unit about the longitudinal axis for bringing the at least one groove of the locking unit into engagement with the at least one corresponding groove of the fastening device.

According to another embodiment of the present invention, the endless structural profile is extruded with two further profile legs arranged at an elongated profile edge opposite to the first elongated profile edge in relation to the base structure. For example, the endless structural profile comprises an upper elongated profile edge and a lower elongated profile edge, which comprise two curved profile legs each. Thereby, the endless structural profile can be made of a metal material, in particular of a light weight metal like aluminum. The aluminum can be a high strength aluminum, for instance. The base structure can be configured as a sheet metal, for instance. Advantageously, costs for manufacturing of the endless structural profile can be reduced. Furthermore, the manufacturing method can be accelerated. As a result, after the step of extruding the endless structural profile is generated with two integrated rotary joint ends or curved profile legs, respectively. In particular, the extruded endless structural profile can be a symmetrical sheet metal with rotary joint attachment.

According to another embodiment of the present invention, the endless structural profile is cut such that the fastening device has a triangular shape, wherein a predetermined rectangular section of the endless structural profile is cut into two, four, six, eight or any other even number of fastening devices. The endless structural profile can be cut by a laser, a waterjet or similar cutting processes, for example depending on the material of the endless structural profile. Further, a cutout can be cut into the endless structural profile and/or the fastening device before or after the fastening device has been cut from the endless structural profile. In particular, the cutout can be cut by the same cutting process as the fastening device.

In other words, the present invention provides solutions that extruded standard triangles can be used as structural load carrying elements with a floating capability in X-direction.

The present invention is explained more specifically below on the basis of the exemplary embodiments indicated in the schematic figures, in which:
- Fig. 1: shows a schematic illustration of a fastening system for compensating tolerances when fastening a component to a support structure of a means of transport according to an embodiment of the invention;
- Fig. 2: shows a schematic illustration of a fastening system for compensating tolerances when fastening a component to a support structure of a means of transport according to a further embodiment of the invention with three fastening devices positively locked to a rail device by two locking units;
- Fig. 3: shows a schematic illustration of a fastening system for compensating tolerances when fastening a hatrack to a frame of an aircraft according to a further embodiment of the invention;
- Fig. 4: shows a schematic illustration in a side view of a fastening device for compensating tolerances when fastening a component to a support structure of a means of transport according to a further embodiment of the invention;
- Fig. 5: shows a schematic illustration in a side view of a fastening device for compensating tolerances when fastening a component to a support structure of a means of transport according to a further embodiment of the invention, wherein Details A show an end region of the first elongated profile edge;
- Fig. 6: shows a schematic illustration in a cut view of a fastening device of Fig. 4;
- Fig. 7: shows a schematic illustration in a perspective view of a rail device for compensating tolerances when fastening a component to a support structure of a means of transport according to a further embodiment of the invention;
- Fig. 8: shows a schematic illustration in direction of a longitudinal axis of the rail device of Fig. 7;
- Fig. 9: shows a schematic illustration in a perspective view of a locking unit for a fastening system according to a further embodiment of the invention;
- Fig. 10: shows a schematic illustration of an aircraft according to a further embodiment of the invention with a fastening system for compensating tolerances when fastening a cabin fitting element to a frame of the aircraft;
- Fig. 11: shows a schematic block diagram of an assembly method for compensating tolerances when fastening a component to a support structure of a means of transport according to another embodiment of the invention;
- Fig. 12: shows a schematic block diagram of a manufacturing method for manufacturing a fastening device for compensating tolerances according to another embodiment of the invention, wherein a situation after cutting the endless structural profile is illustrated.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

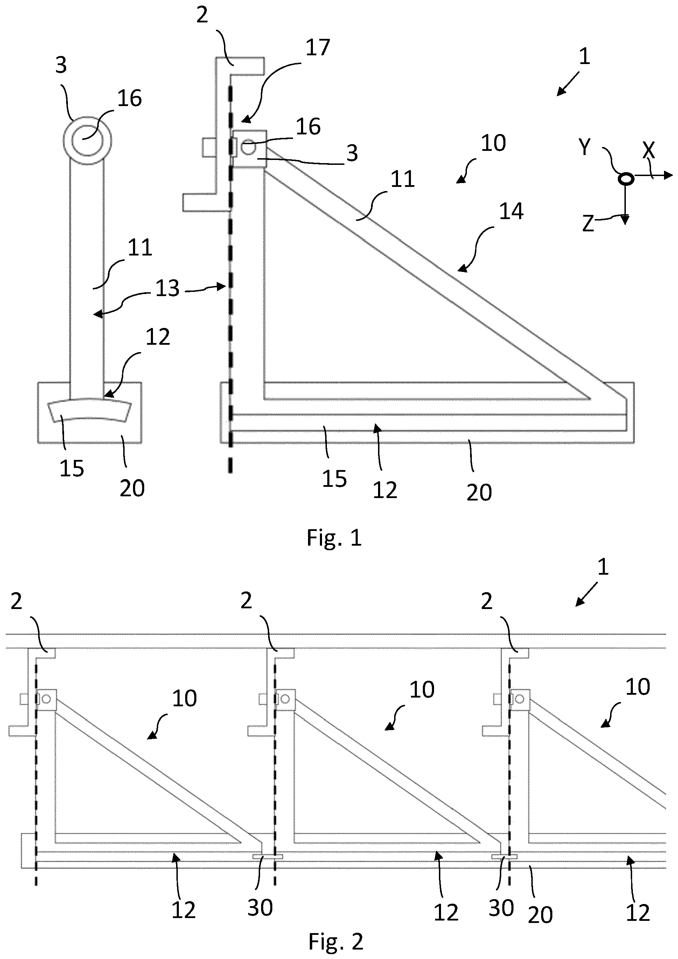

Fig. 1 shows a schematic illustration of a fastening system 1 for compensating tolerances when fastening a component to a support structure 2 of a means of transport. Specifically, a side view (right hand side) and a front view (left hand side) of the fastening system 1 is illustrated in Fig. 1.

The fastening system 1 comprises a support structure 2 having a fastening interface.

The fastening system 1 also comprises a fastening device 10. The fastening device 10 comprises a base structure 11 having three elongated profile edges 12, 13, 14. The three elongated profile edges 12, 13, 14 form a right-angled tringle. The fastening device 10 further comprises two profile legs 15 for positively locking a first elongated profile edge 12 of the three elongated profile edges to a rail device 20. The two profile legs 15 extend along the first elongated profile edge 12, such that the first elongated profile edge 12 comprises a substantially three-legged cross sectional shape as it is illustrated in the front view on the left hand side of Fig. 1. The two profile legs 15 comprise a curvature in a cross sectional view. Moreover, the fastening device 10 comprises a fastening interface 16 for connecting the fastening device 10 to the support structure 2. The fastening interface 16 is arranged at an area of an intersection 17 of a second elongated profile edge 13 and a third elongated profile edge 14.

The fastening device 10 is mountable to the support structure 2 via the corresponding fastening interfaces 16. Here, the fastening interface 16 is configured to be used by a pin connector 3. For example, the fastening interface 17 can be configured as a bolt end to receive a pin, the pin connector 3 or alternative fastening elements.

The rail device 20 comprises a longitudinal recess 21 for guiding the first elongated profile edge 12 of the fastening device 10. The longitudinal recess extends along a longitudinal axis X. The rail device 20 further comprises cutouts 22 for positively locking the rail device 20 to the fastening device 10 by a locking unit 30. Thereby, the two profile legs 15 are guided in the longitudinal recess 21.

Further, the fastening system 1 comprises a locking unit 30, which is arranged at least sectionwise in the longitudinal recess 21 at an end region of the fastening device 10 and positively locks the fastening device 10 to the rail device 20 in relation to the longitudinal axis X such that tolerances are compensable along the longitudinal axis X. Thus, tolerances of the frames of an aircraft can be compensated along the longitudinal axis X. Thereby, the locking unit is configured to withstand predetermined loads, in particular crash loads, that can be transferred in X-direction, so along the longitudinal axis. The fastening system 1 provides a secondary structure brick which can be sticked together in a traveling direction of the means of transport. Further, the fastening system can provide a continuous load introduction and/or distribution inside a fuselage of the means of transport like an aircraft.

Fig. 2 shows a schematic illustration of a fastening system 1 for compensating tolerances when fastening a component to a support structure 2 of a means of transport with three fastening devices 10 positively locked to a rail device 20 by two locking units 30.

The three fastening devices 10 substantially have the same features as the fastening device 10 as described in Fig. 1. Each fastening device 10 is mounted to a support structure 2. Thereby, the three fastening devices 10 are aligned to each other along the longitudinal axis X. the three fastening devices 10 are locked to one rail device 20.

The three fastening devices 10 are positively locked to the one rail device 20 by two locking units 30, wherein one locking unit 30 engages with two adjacent fastening devices 10. Hence, the middle fastening device 10 is engaged to the two locking units 30 at both end regions of the first elongated profile edge 12. The left and the right fastening device 10 each is engaged to one of the two locking units 30 at one end region of their first elongated profile edge 12.

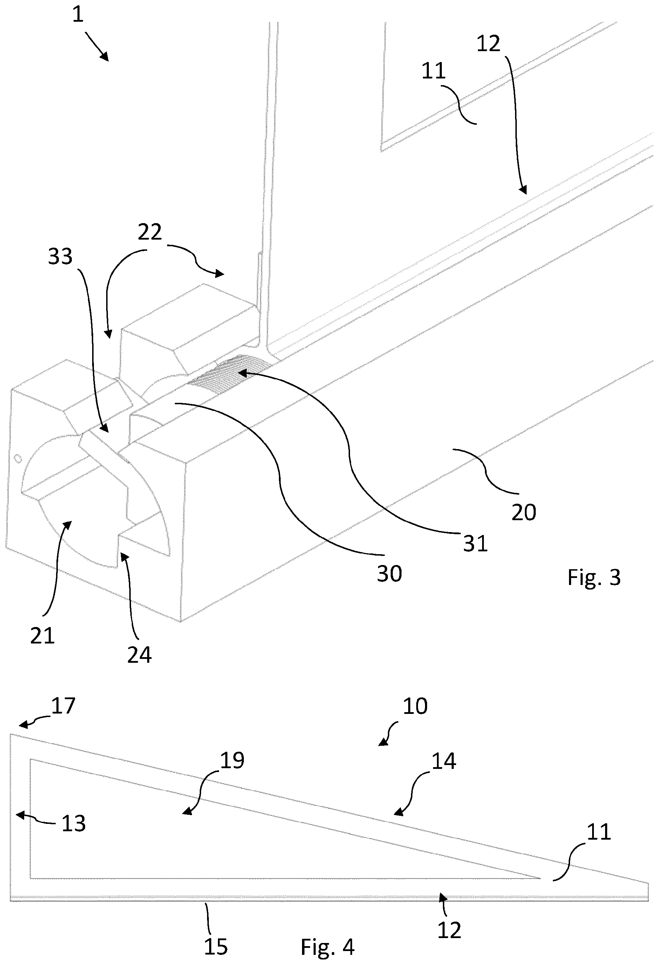

Fig. 3 shows a schematic illustration of a fastening system 1 for compensating tolerances when fastening a hatrack to a frame 2 of an aircraft.

The fastening system 1 exemplarily corresponds to the fastening system of Fig. 1. Furthermore, the curvature of the two profile legs 15 has a radius that is corresponding to a distance between the two profile legs 15 and a mass center of the attached hatrack or cabin fitting element 101. Thus, loads transmitted by the fastening system 1 can act through the mass center independently of the swivel movement for tolerance compensation.

The locking unit 30 comprises steps 31, which are corresponding to the steps 18 of the two profile legs 15 of the fastening device 10. Additionally, the locking unit 30 can engage with the rail device 20 like a guiding rail by a teeth connection 32. The teeth connection 32 is formed by the cutouts 22 in the guiding rail 20. The locking unit 30 further comprises a lever 33 for locking the locking unit 30 in the direction of the longitudinal axis X by pivoting the locking unit 30 such that the lever 33 engages with one of the cutouts 22 of the guiding rail 20.

Here, fastening system 1 comprises the steps 18, 31 as well as the teeth connection 32. Therefore, a stepwise locking by the locking unit 30 with stepless adjustment by the teeth connection 32 is provided. The steps 18, 31 are fine adjustable in X-axis with form fit.

The longitudinal recess 21 forms a circular segment in a cross sectional view, wherein the circular segment is larger than the two curved profile legs 15 of the first elongated profile edge 12. The fastening device 10 can be swiveled relative to the rail device 20 up to 10° when mounted in the rail device. Thus, the locking unit is configured to positively lock the fastening device to the guiding rail such that tolerances are compensable by a swivel movement of the fastening device 10 relative to the rail device 20 about the longitudinal axis. The fastening system can provide a swinging or rotation, respectively, of the fastening device relative to the rail device around the longitudinal axis, for example in a Y-direction.

Fig. 4 shows a schematic illustration in a side view of a fastening device 10 for compensating tolerances when fastening a component to a support structure 2 of a means of transport.

The fastening device 10 comprises a base structure 11 having three elongated profile edges 12, 13, 14. The three elongated profile edges 12, 13, 14 form a triangle, in particular a right-angled tringle. The base structure 11 comprises a cutout 19, in particular a triangular cutout as illustrated in Fig. 4. Hence, a weight of the fastening device can be reduced. Nevertheless, the cutout 19 is not limited to a triangular shape but can be shaped as a rectangle, circle or similar as well. Furthermore, a corner of the triangle or the rectangle can be shaped angular, rounded or combinations thereof.

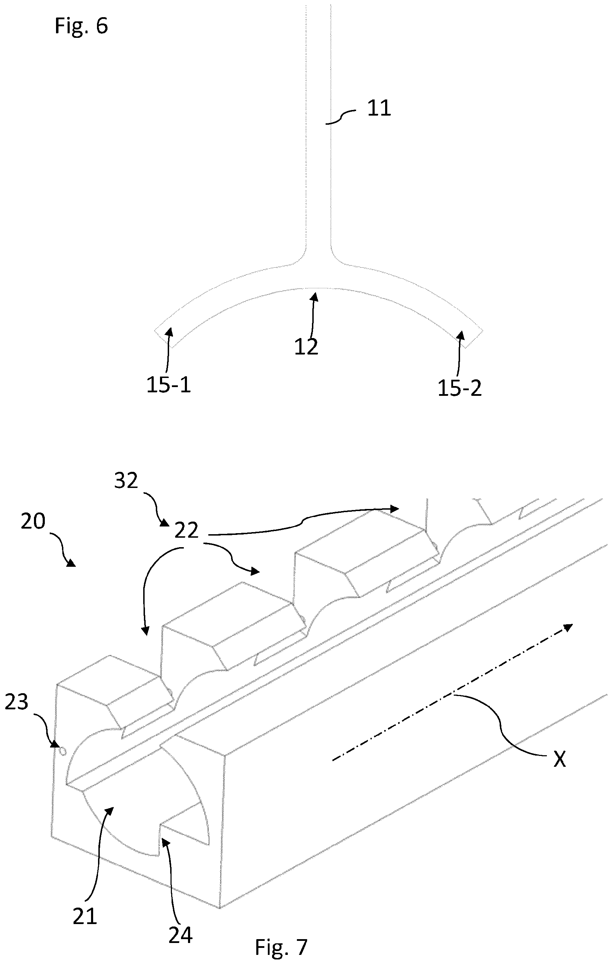

The fastening device 10 further comprises two profile legs 15 for positively locking a first elongated profile edge 12 of the three elongated profile edges to a rail device 20, for example to rail device of Fig. 7. The two profile legs 15 extend along the first elongated profile edge 12, such that the first elongated profile edge 12 comprises a substantially three-legged cross sectional shape, and wherein the two profile legs 15 are engageable with a longitudinal recess 21 of the rail device 20 and comprise a curvature in a cross sectional view.

Moreover, the fastening device 10 comprises a fastening interface 16 for connecting the fastening device 10 to a support structure 2. The fastening interface 16 is arranged at an area of an intersection 17 of a second elongated profile edge 13 and a third elongated profile edge 14.

In this example, the fastening device 10 is made of aluminum, wherein the base structure 11 has a continuous thickness. The two profile legs 15 also have the same thickness as the base structure.

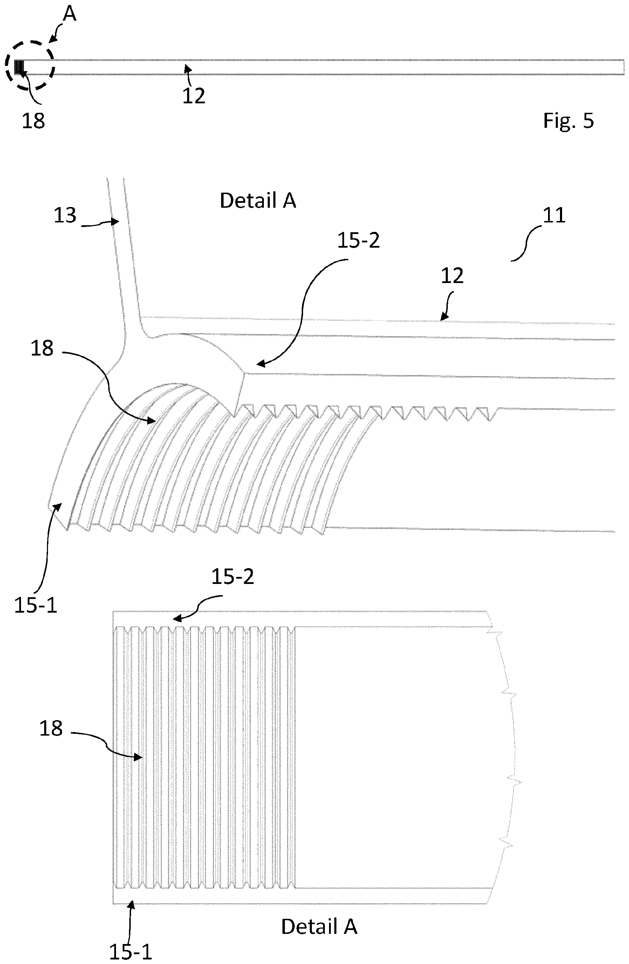

Fig. 5 shows a schematic illustration in a side view of a fastening device 10 for compensating tolerances when fastening a component to a support structure 2 of a means of transport, wherein Details A show an end region A of the first elongated profile edge 12.

In particular, the first elongated profile edge 12 is illustrated. That means the fastening device 10 is shown in a bottom view with regard to the fastening system as it is shown in Fig. 4. The first elongated profile edge 12 comprises two profile legs 15, which comprise a plurality of grooves 18 for positively the fastening device 10 to the rail device 20 in direction of the first elongated profile edge 12, wherein the plurality of grooves 18 extends from one profile leg 15-1 to the other profile leg 15-2. In other words, the two profile legs 15 have partially steps 18 for form fitting in X-direction.

Here, the plurality of grooves 18 is arranged at an end region A of the first elongated profile edge 12. The at least one groove 18 can be arranged at one end region A of the first elongated profile edge 12 or at both end regions. In Fig. 5, the plurality of grooves 18 is arranged at the left end of the first elongated profile edge 12. Thus, the plurality of grooves 18 is arranged at the end region, where the second elongated profile edge 13 meets the first elongated profile edge 12. Thereby, the plurality of grooves 18 extends between each front end of the two profile legs 15-1, 15-2 and faces away from the base structure 11.

Fig. 6 shows a schematic illustration in a cut view of a fastening device 10 of Fig. 4.

In Fig. 6, the curvature of the two profile legs 15 is illustrated. For example, the curvature has a constant radius.

Fig. 7 shows a schematic illustration in a perspective view of a rail device 20 for compensating tolerances when fastening a component to a support structure 2 of a means of transport.

The rail device 20 comprises a longitudinal recess 21 for guiding a first elongated profile edge 12 of a fastening device 10, in particular of a fastening device according to the embodiment in Fig. 4, 5 or 6. The longitudinal recess extends along a longitudinal axis X.

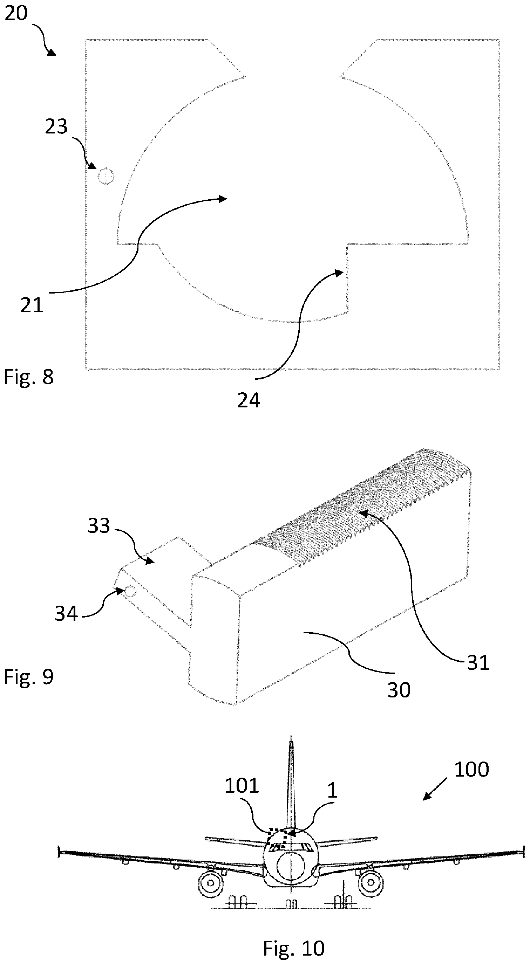

The rail device 20 further comprises cutouts 22 for positively locking the rail device 20 to the fastening device 10 by a locking unit 30. In particular, the cutouts 22 are configured for engaging with the locking unit 30 of Fig. 9. The cutouts 22 are arranged stepwise along the longitudinal recess 21. The rail device 20 is manufactured by an extrusion process, for example.

Furthermore, the rail device 20 comprises a hole 23 for receiving an anti-twist protection member 34, wherein the hole 23 is arranged at the cutouts 22 and extends parallel to the longitudinal recess 21. That means the hole 23 is configured as a counterpart for the anti-twist protection member 34.

For example, the rail device 20 comprises an end stop 24 for stopping a rotation of the locking unit 30 when getting into engagement with one of the cutouts 22. The end stop 24 extends along the longitudinal recess 21.

Fig. 8 shows a schematic illustration in direction of the longitudinal axis X of the rail device 20 of Fig. 7.

Fig. 9 shows a schematic illustration in a perspective view of a locking unit 30 for a fastening system 1.

Exemplarily, the locking unit 30 is configured as a locking wedge for tolerance compensation. The locking wedge 30 comprises a plurality of grooves 31. Here, the a plurality of grooves 31 is corresponding to the a plurality of grooves 18 of the two profile legs 15 of the fastening device 10 of Fig. 1 to 6. That means, the locking wedge 30 has a plurality of grooves 31 or steps as a locking counterpart to engage with the a plurality of grooves 18 or steps of the two profile legs 15.

Furthermore, the locking wedge 30 can engage with the rail device 20 by a teeth connection 32. In other words, a rotary teeth connection 32 can be provided between the fastening device 10 or bracket, respectively, and the rail device 20 or secondary structure rail, respectively. In case the fastening system 1 comprises the plurality of grooves 18, 31 as well as the teeth connection 32 a stepwise locking by the locking wedge 30 with stepless adjustment by the teeth connection 32.

Further, the locking wedge 30 comprises a lever 33 for locking the locking wedge 30 in the direction of the longitudinal axis X by pivoting the locking wedge 30 such that the lever 33 engages with one of the cutouts 22, so the teeth connection 32, of the rail device 20.

The locking wedge 30 further comprises an anti-twist protection member 34 for preventing unintentional unlocking. Such an unintentional unlocking may occur due to vibrations or similar circumstances. The anti-twist protection member 34 can be configured as an automatic anti-twist protection. For automatic use the anti-twist protection member can comprise a spring loaded ball. Furthermore, the anti-twist protection member 34 can be released, in particular for de-installation. The anti-twist protection member 34 can be configured as a spring loaded ball, for example.

Fig. 10 shows a schematic illustration of an aircraft 100 according to another embodiment of the invention with a fastening system 1 for compensating tolerances when fastening a cabin fitting element 101 to a frame 2 of the aircraft 100.

For example, the support structure 2 is configured as a frame of the aircraft 100. For example, the cabin fitting element 101 comprises the rail device 20 or the rail device 20 is integrated in the cabin fitting element 101.

The frame 2 forms the fuselage, for example. Due to the adjustability in X- and Y-direction the cabin fitting element 101, for example an overhead storage compartment, can be aligned properly, which leads to a pleasant cabin impression. This can be applied without compromising on the crash load path of the frame 2.

The X-direction here corresponds to a flight direction of the aircraft 100.

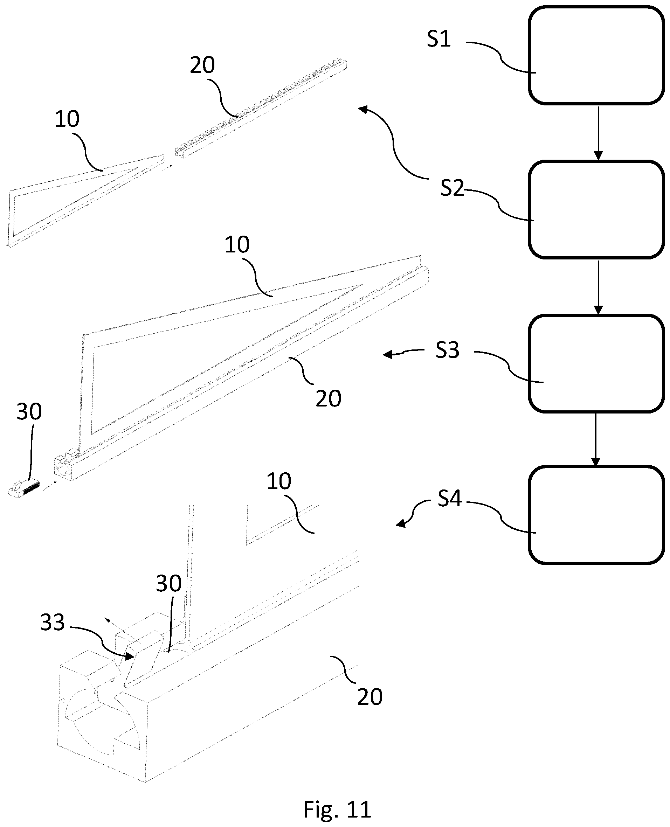

Fig. 11 shows a schematic block diagram of an assembly method for compensating tolerances when fastening a component 101 to a support structure 2 of a means of transport.

The assembly method comprises a step of providing S1, inserting S2, inserting S3 and positively locking S4.

Exemplarily, the steps S2-S4 are illustrated graphically for visualizing those steps.

In the step of providing S1, a rail device 20 as described in Fig. 1, 2, 3, 7 or 8 is provided.

In the step of inserting S2, a first elongated profile edge 12 of a fastening device 10 as described in Fig. 1, 2, 3, 4, 5 or 6 is inserted into the longitudinal recess 21 of the rail device 20. The two profile legs 15 are guided in the longitudinal recess 21.

In the step of inserting S3, a locking unit 30 is inserted into the longitudinal recess 21 of the rail device 20 such that the locking unit 30 is arranged at an end region A of the fastening device 10. For example, the locking unit is inserted S3 into the longitudinal recess 21 such that grooves 31 of the locking unit 30 overlap corresponding grooves 18 of the fastening device 10 without being in engagement.

In the step of positively locking S4, the fastening device 10 is positively locked to the rail device 20 by the locking unit 30 in relation to a longitudinal axis X such that tolerances are compensable along the longitudinal axis X. For example, the step of positively locking S4 includes a pivoting of the locking unit 30 about the longitudinal axis X for bringing the grooves 31 of the locking unit 30 into engagement with the corresponding grooves 18 of the fastening device 10.

After applying the steps S1-S4, the fastening system 1 is in particular in the situation as illustrated in Fig. 3.

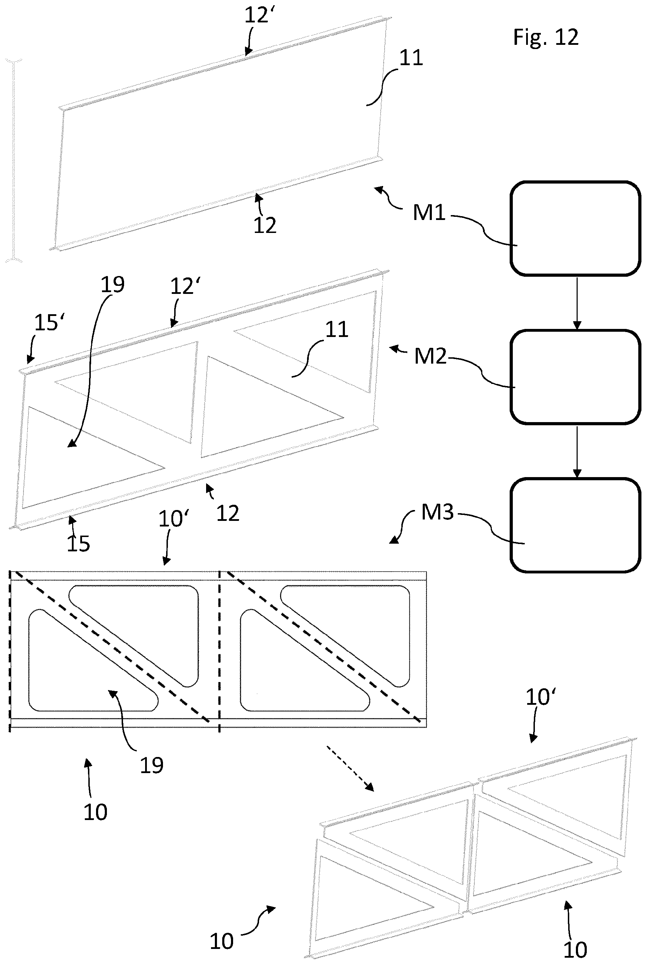

Fig. 12 shows a schematic block diagram of a manufacturing method for manufacturing a fastening device 10 for compensating tolerances, wherein a situation after cutting the endless structural profile is illustrated.

The manufacturing method comprises a step of extruding M1, cutting M2 and cutting M3.

Exemplarily, the steps M1-M3 are illustrated graphically for visualizing those steps. Additionally, the situation after cutting the endless structural profile according to the manufacturing method is illustrated below the steps M1-M3.

In the step of extruding M1, an endless structural profile with a base structure 11 and two profile legs 15 arranged at a first elongated profile edge 12 of the base structure 12 is extruded, wherein the two profile legs 15 comprise a curvature in a cross sectional view. Here, the endless structural profile is extruded M1 with two further profile legs 15' arranged at an elongated profile edge 12' opposite to the first elongated profile edge 12 in relation to the base structure 11. For example, the endless structural profile comprises an upper elongated profile edge 12' and a lower elongated profile edge 12, which comprise two curved profile legs 15, 15' each. Thereby, the endless structural profile is made of a high strength aluminum, for instance. The base structure 11 is configured as a sheet metal, for instance. In particular, the extruded endless structural profile is a symmetrical sheet metal with rotary joint ends 15, 15'.

In the step of cutting M2, a cutout 19 is cut into the endless structural profile and/or the fastening device 10 before the fastening device is cut M3 from the endless structural profile. Here, both cutting steps are performed by the same cutting process, for example by a laser cutting process.

In the step of cutting M3, the endless structural profile is cut such that a fastening device 10 is provided, wherein the fastening device 10 comprises the base structure 12 having three elongated profile edges 12, 13, 14, wherein the three elongated profile edges 12, 13, 14 include the first elongated profile edge 12. Exemplarily, the graphical illustration of step M3 shows dashed lines, which represent preferred cutting lines. By extruding the endless structural profile dimensions of the two profile legs can be reduced. Furthermore, the two profile legs 15 can be integrally manufactured at the base structure 11. Thereby, the endless structural profile is cut M3 such that the fastening device 10 has a triangular shape, wherein a predetermined rectangular section of the endless structural profile is cut into four fastening devices 10, 10', as it is illustrated in the graphical illustration of step M3 and the illustration of the situation after cutting the endless structural profile. The endless structural profile is cut M2, M3 by a laser.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: fastening system
- 2: support structure
- 3: pin connector

- 10: fastening device
- 11: base structure
- 12: first elongated profile edge
- 13: second elongated profile edge
- 14: third elongated profile edge
- 15: two profile legs
- 16: fastening interface
- 17: intersection
- 18: at least one groove
- 19: cutout
- 20: rail device
- 21: longitudinal recess
- 22: cutouts
- 23: hole
- 24: end stop
- 30: locking unit
- 31: at least one groove
- 32: teeth connection
- 33: lever
- 34: anti-twist protection member

- 100: aircraft
- 101: component

- A: end region
- X: longitudinal axis

- M1: extruding
- M2: cutting
- M3: cutting

- S1: providing
- S2: inserting
- S3: inserting
- S4: positively locking

## Claims

1. Fastening device (10) for compensating tolerances when fastening a component (101) to a support structure (2) of a means of transport, in particular when fastening a cabin fitting element to a frame of an aircraft (100), the fastening device (10) comprising:
a base structure (11) having at least three elongated profile edges (12, 13, 14);
two profile legs (15) for positively locking a first elongated profile edge (12) of the at least three elongated profile edges to a rail device (20), wherein the two profile legs (15) at least partly extend along the first elongated profile edge (12), such that the first elongated profile edge (12) comprises a substantially three-legged cross sectional shape, and wherein the two profile legs (15) are engageable with a longitudinal recess (21) of the rail device (20) and comprise a curvature in a cross sectional view;
a fastening interface (16) for connecting the fastening device (10) to a support structure (2), wherein the fastening interface (16) is arranged at an area of an intersection (17) of a second elongated profile edge (13) and a third elongated profile edge (14).

2. Fastening device (10) according to claim 1, wherein the two profile legs (15) comprise at least one groove (18) for positively locking the fastening device (10) to the rail device (20) in direction of the first elongated profile edge (12), wherein the at least one groove (18) extends from one profile leg (15-1) to the other profile leg (15-2).

3. Fastening device (10) according to claim 2, wherein the at least one groove (18) is arranged at an end region (A) of the first elongated profile edge (12).

4. Fastening device (10) according to claim 2 or 3, wherein the at least one groove (18) extends between each front end of the two profile legs (15) and faces away from the base structure (11).

5. Fastening device (10) according to one of the preceding claims, wherein the base structure (11) comprises a cutout (19), in particular a triangular cutout.

6. Rail device (20) for compensating tolerances when fastening a component (101) to a support structure (2) of a means of transport, in particular when fastening a cabin fitting element to a frame of an aircraft (100), comprising:
a longitudinal recess (21) for guiding a first elongated profile edge (12) of a fastening device (10);
cutouts (22) for positively locking the rail device (20) to the fastening device (10) by a locking unit (30).

7. Rail device (20) according to claim 6, further comprising a hole (23) for receiving an anti-twist protection member (34), wherein the hole (23) is arranged at the cutouts (22) and extends substantially parallel to the longitudinal recess (21).

8. Rail device (20) according to claim 6 or 7, further comprising an end stop (24) for stopping a rotation of the locking unit (30) when getting into engagement with one of the cutouts (22), wherein the end stop (24) extends along the longitudinal recess (21).

9. Fastening system (1) for compensating tolerances when fastening a component (101) to a support structure (2) of a means of transport, in particular when fastening a cabin fitting element to a frame of an aircraft (100), comprising:
a support structure (2) having a fastening interface;
a fastening device (10) according to one of the claims 1 to 5, which is mountable to the support structure (2) via the corresponding fastening interfaces (16);
a rail device (20) according to one of the claims 6 to 8, wherein the two profile legs (15) are guided in the longitudinal recess (21); and
a locking unit (30), which is arranged at least sectionwise in the longitudinal recess (21) at an end region (A) of the fastening device (10) and positively locks the fastening device (10) to the rail device (20) in relation to a longitudinal axis (X) such that tolerances are compensable along the longitudinal axis (X).

10. Fastening system (1) according to claim 9, wherein the curvature of the two profile legs (15) has a radius that is corresponding to a distance between the two profile legs (15) and a mass center of an attached component (101).

11. Fastening system (1) according to claim 9 or 10, wherein the locking unit (30) comprises at least one groove (31), which is corresponding to the at least one groove (18) of the two profile legs (15) of the fastening device (10).

12. Fastening system (1) according to one of the claims 9 to 11, wherein the longitudinal recess (21) forms a circular segment in a cross sectional view, wherein the circular segment is larger than the two curved profile legs (15) of the first elongated profile edge (12).

13. Fastening system (1) according to one of the claims 9 to 12, wherein the locking unit (30) comprises a lever (33) for locking the locking unit (30) in the direction of the longitudinal axis (X) by pivoting the locking unit (30) such that the lever (33) engages with one of the cutouts (22) of the rail device (20).

14. Aircraft (100) comprising a cabin fitting element (101), in particular an overhead compartment, which is fixed to a frame (2) of the aircraft (100) by means of a fastening system (1) according to one of the claims 9 to 13.

15. Assembly method for compensating tolerances when fastening a component (101) to a support structure (2) of a means of transport, in particular when fastening a cabin fitting element to a frame of an aircraft (100), comprising the steps of:
providing (S1) a rail device (20) according to one of the claims 6 to 8;
inserting (S2) a first elongated profile edge (12) of a fastening device (10) according to one of the claims 1 to 6 into the longitudinal recess (21) of the rail device (20), wherein the two profile legs (15) are guided in the longitudinal recess (21);
inserting (S3) a locking unit (30) into the longitudinal recess (21) of the rail device (20) such that the locking unit (30) is arranged at an end region (A) of the fastening device (10); and
positively locking (S4) the fastening device (10) to the rail device (20) by the locking unit (30) in relation to a longitudinal axis (X) such that tolerances are compensable along the longitudinal axis (X).

16. Assembly method according to claim 15, wherein the locking unit is inserted (S3) into the longitudinal recess (21) such that an at least one groove (31) of the locking unit (30) overlaps an at least one corresponding groove (18) of the fastening device (10) without being in engagement.

17. Assembly method according to claim 16, wherein the step of positively locking (S4) includes a pivoting of the locking unit (30) about the longitudinal axis (X) for bringing the at least one groove (31) of the locking unit (30) into engagement with the at least one corresponding groove (18) of the fastening device (10).

18. Manufacturing method for manufacturing a fastening device for compensating tolerances, in particular for manufacturing a fastening device (10) according to one of the claims 1 to 5, comprising the steps of:
extruding (M1) an endless structural profile with a base structure (11) and two profile legs (15) arranged at a first elongated profile edge (12) of the base structure (12), wherein the two profile legs (15) comprise a curvature in a cross sectional view;
cutting (M3) the endless structural profile such that a fastening device (10) is provided, wherein the fastening device (10) comprises the base structure (12) having at least three elongated profile edges (12, 13, 14), wherein the at least three elongated profile edges (12, 13, 14) include the first elongated profile edge (12).

19. Manufacturing method according to claim 18, wherein the endless structural profile is extruded (M1) with two further profile legs (15') arranged at an elongated profile edge (12') opposite to the first elongated profile edge (12) in relation to the base structure (11).

20. Manufacturing method according to claim 18 or 19, wherein the endless structural profile is cut (M3) such that the fastening device (10) has a triangular shape, wherein a predetermined rectangular section of the endless structural profile is cut into two, four, six or eight fastening devices (10, 10').
